# EUROPÄISCHE PATENTANMELDUNG

(11) **EP 3 822 921 A1**
(43) Veröffentlichungstag der Anmeldung: **19.05.2021**
(21) Anmeldenummer: 19208614.8
(22) Anmeldetag: 12.11.2019
(51) Int. Cl.: G06T 19/00, H04N 5/272

(54) **VERFAHREN ZUM ERZEUGEN EINES VIDEOSIGNALS UND SPORTANLAGE**

(71) Anmelder: Ereignisschmiede GmbH, 10997 Berlin (DE)
(72) Erfinder: Möller, Martin, 10997 Berlin (DE)
(74) Vertreter: Gramm, Lins & Partner Patent- und Rechtsanwälte PartGmbB

(57) **Zusammenfassung**

Die Erfindung betrifft ein Verfahren zum Erzeugen eines Videosignals, mit den Schritten (i) kontinuierliches Aufnehmen von Videobildern mittels einer Haupt-Kamera (24), sodass Videodaten erhalten werden, (ii) kontinuierliches Aufnehmen von Infrarot-Strahlungsbildern (I), die von einem Ziel-Objekt ausgehen, mittels einer Infrarotkamera (26), sodass Infrarotbilddaten erhalten werden, (iii) Bestimmen eines Gebiets (G) in den Videobildern aus den Infrarotbilddaten. Erfindungsgemäß ist vorgesehen, dass (iv) das Ziel-Objekt ein Netz (16), insbesondere ein Ballfangnetz, ist, das zumindest eine Infrarotstrahlungssignal emittierende Struktur aufweist, und (v) das Verknüpfen von Positionsdaten, die die Position des Gebiets (G) kodieren, mit den Videodaten, sodass anhand der Positionsdaten eine Graphik in das Gebiet (G) einfügbar ist.

## Beschreibung

Die Erfindung betrifft ein Verfahren zum Erzeugen eines Videosignals. Gemäß einem zweiten Aspekt betrifft die Erfindung ein Netz, insbesondere ein Ballfangnetz und eine Sportanlage mit (a) einem Netz, insbesondere einem Ballfangnetz, (b) einem Kamerasystem, das (i) eine Haupt-Kamera zum Aufnehmen von Videobildern im sichtbaren Frequenzbereich und (ii) eine Infrarotkamera zum kontinuierlichen Aufnehmen von Infrarot-Strahlungsbildern von Infrarot-Strahlung, die von dem Infrarot-Sender ausgeht, aufweist.

Ein Videosignal wird beispielsweise durch Aufnehmen eines Spiels, insbesondere eines Fußballspiels, erzeugt. Die Übertragung derartiger Fußballspiele wird oft zur Übertragung von Werbung genutzt.

Bei Spielen, die in mehr als einem Land beispielsweise per Fernsehen verfolgt werden, wird den Zuschauern regelmäßig für das Land spezifische Werbung angezeigt. Ein entsprechendes Verfahren ist in der EP 1 362 476 B1 beschrieben. Werbebanden, die zum Anzeigen von Werbung im Stadion verwendet werden, emittieren dazu Infrarotlicht, das mittels einer Infrarotkamera erfasst wird. Die Bereiche, in denen von der Kamera ein Infrarotbild erfasst wird, werden in einem nachfolgenden Schritt mit anderen Werbeinhalten als denen, die auf der Werbebande gezeigt werden, gefüllt. Nachteilig an einem derartigen Verfahren ist, dass die dafür notwendigen Banden vergleichsweise aufwändig herzustellen sind. Nachteilig ist zudem, dass Werbebanden oder andere Anzeigegeräte innerhalb beispielsweise eines Fußballstadions nur an vergleichsweise wenigen Stellen positioniert werden können und wenn das Seherlebnis der Zuschauer im Stadion nicht beeinträchtigt werden soll.

Der Erfindung liegt die Aufgabe zugrunde, Nachteile im Stand der Technik zu vermindern.

Die Erfindung löst das Problem durch ein Verfahren zum Erzeugen eines Videosignals mit den Schritten (i) kontinuierliches Aufnehmen von Videobildern mittels einer Haupt-Kamera, sodass Videodaten erhalten werden, (ii) kontinuierliches Aufnehmen von Infrarot-Strahlungsbildern von Infrarot-Strahlung, die von einem Zielobjekt ausgeht, mittels einer Infrarotkamera, sodass Infrarotbilddaten erhalten werden, (iii) Bestimmen eines Gebiets in den Videobildern aus den Infrarotbilddaten, wobei (iv) das Zielobjekt ein Netz, insbesondere ein Ballfangnetz, ist, das zumindest eine Infrarotstrahlungssignal emittierende Struktur aufweist, und (v) Verknüpfen von Positionsdaten, die die Position des Gebiets kodieren, mit den Videodaten, sodass anhand der Positionsdaten eine Grafik in das Gebiet einfügbar ist.

Gemäß einem zweiten Aspekt löst die Erfindung das Problem durch eine Sportanlage mit (a) einem Netz, insbesondere einem Ballfangnetz, das zumindest vier Infrarot-Sender zum Aussenden von Infrarotstrahlungssignalen aufweist, und (b) einem Kamerasystem, das (i) eine Hauptkamera zum Aufnehmen von Videobildern im sichtbaren Frequenzbereich und (ii) eine Infrarotkamera zum kontinuierlichen Aufnehmen von Infrarot-Strahlungsbildern von Infrarot-Strahlung, die von den Infrarot-Sendern ausgeht, aufweist, wobei (c) die Infrarot-Sender am Netz befestigt sind und (d) das Kamerasystem ausgebildet ist zum automatischen Durchführen eines Verfahrens mit den Schritten (i) kontinuierliches Aufnehmen von Videobildern mittels der Haupt-Kamera, sodass Videodaten erhalten werden, (ii) kontinuierliches Aufnehmen von Infrarot-Strahlungsbildern, die von einem Ziel-Objekt ausgehen, mittels der Infrarotkamera (iii) Bestimmen eines Gebiets in den Videobildern anhand der Infrarot-Strahlungsbilder und (v) Verknüpfen von Positionsdaten, die die Position des Gebiets kodieren, mit den Videodaten, sodass anhand der Positionsdaten eine Grafik in das Gebiet einfügbar ist.

Vorteilhaft an der Erfindung ist, dass eine Grafik, beispielsweise eine Werbegrafik, in einem Bereich des Bildes eingefügt werden kann, an dem sich ein Netz befindet. Netze können, beispielsweise in Fußballstadien, auch zwischen den Zuschauern und den Spielern angeordnet werden. An einer derartigen Stelle wären eine Bande oder eine Anzeigetafel nicht denkbar, ohne den Zuschauern die Sicht zu versperren.

Vorteilhaft ist zudem, dass Netze, insbesondere Ballfangnetze, in vielen Fußballstadien bereits vorhanden sind. Diese mit Infrarotstrahlungssignal emittierenden Strukturen, beispielsweise mit Infrarotsendern auszustatten, ist vergleichsweise einfach.

Vorteilhaft ist zudem, dass Bereiche einer Sportstätte, beispielsweise eines Fußballstadions, für die Anzeige von Werbung genutzt werden können, die ansonsten nicht genutzt werden können. Dadurch, dass das Gebiet am Netz ausgebildet ist, ergibt sich jedoch für den Zuschauer der Eindruck, die Grafik wäre am Netz real vorhanden.

Mithilfe der Erfindung ist es möglich, dem Betrachter der Videobilder in dem Gebiet eine Grafik anzuzeigen, ohne dass an der Stelle, an der der Betrachter die Grafik sieht, ein Objekt vorhanden ist, das die Sicht der Zuschauer im Stadion behindern würde. In anderen Worten kann die Grafik an einer Stelle eingeblendet werden, die ansonsten nicht für andere Zwecke genutzt werden kann.

Im Rahmen der vorliegenden Beschreibung wird unter dem kontinuierlichen Aufnehmen von Videobildern mittels der Haupt-Kamera insbesondere verstanden, dass zumindest eine Haupt-Kamera vorhanden ist. Es ist aber möglich und vorteilhaft, wenn zwei, drei, vier oder mehr Haupt-Kameras vorhanden sind. In der Regel existieren weniger als 100 Haupt-Kameras. Diese Haupt-Kameras nehmen vorzugswiese Videobilder aus unterschiedlichen Perspektiven und/oder von unterschiedlichen Positionen aus auf.

Das Aufnehmen der Infrarot-Strahlungsbilder erfolgt vorzugsweise aus einer Perspektive, die der Perspektive der Haupt-Kamera entspricht. Auf diese Weise lässt sich das Gebiet in den Videobildern mit einer besonders hohen Genauigkeit identifizieren.

Unter einem Ballfangnetz wird insbesondere ein Netz verstanden, das sich vom Spielfeld aus gesehen hinter und zumindest teilweise über dem Tor befindet und/oder dazu dient, Zuschauer vor Bällen zu schützen.

Unter dem Merkmal, dass das Netz zumindest eine Infrarotstrahlungssignal emittierende Struktur aufweist, wird insbesondere verstanden, dass das Ziel-Objekt so ausgestattet ist, dass es vom Hintergrund eindeutig separierbare Infrarotstrahlung aussendet. Das kann beispielsweise dadurch erfolgen, dass die Infrarotstrahlung auf ein so enges Frequenzband beschränkt ist, dass sich die emittierte Infrarotstrahlung von der Infrarotstrahlung des Hintergrunds abhebt. Vorzugsweise ist die Infrarotstrahlungssignal emittierende Struktur so ausgebildet, dass im Infrarot-Strahlungsbild die Struktur in zumindest einem Frequenzbereich zumindest doppelt so hell erscheint wie der Hintergrund.

Alternativ oder zusätzlich ist es möglich, dass die Infrarotstrahlung zeitlich moduliert ist. Die Infrarotstrahlung des Hintergrundes ist in aller Regel zeitlich unmoduliert, sodass die Position des Ziel-Objekts, insbesondere des Gebiets des Ziel-Objekts, durch Kontrastbildung zum Hintergrund ermittelbar ist.

Es ist zudem möglich, dass die Infrarotstrahlungssignale so intensiv sind, dass sie sich vom Hintergrund unterscheiden. So ist es möglich, dass das Netz Heizdrähte aufweist. Günstig ist es dann, wenn die Heizdrähte so stark bestromt werden, dass die Temperatur des Netzes deutlich höher ist als die des Hintergrunds. Auch in diesem Fall kann die Lage des Netzes, insbesondere des Gebietes des Netzes, bestimmt werden, in dem der Kontrast innerhalb des Infrarotbilds ortsaufgelöst bestimmt wird. Bereiche besonders hohen Kontrasts führen dann mit sehr hoher Wahrscheinlichkeit zum Zielobjekt.

Es ist auch möglich, dass das Netz zumindest teilweise aus lichtsammelndem Kunststoff aufgebaut ist, wobei dieser lichtsammelnde Kunststoff so ausgebildet ist, dass er sichtbares Licht in Infrarotlicht umwandelt. Dieses Infrarotlicht liegt in einem engen Frequenzband und in diesem Frequenzband ist die Intensität deutlich höher, beispielsweise zumindest doppelt so hoch, wie die Intensität des Hintergrunds. So ergibt sich ein starker Kontrast zwischen dem Netz und dem Hintergrund.

Unter dem Merkmal, dass die Positionsdaten, die die Position des Gebiets kodieren, mit den Videodaten verknüpft werden, wird insbesondere verstanden, dass für den Zeitpunkt anhand der Verknüpfung der Positionsdaten und der Videodaten für jedes einzelne Videobild berechnet werden kann, wo sich das Gebiet befindet. Besonders günstig ist es, wenn aus den Videodaten und den Positionsdaten kombinierte Daten erzeugt werden.

Unter dem Gebiet wird insbesondere ein im mathematischen Sinne zusammenhängender Bereich des Netzes verstanden. Das Gebiet kann sich über das gesamte Netz erstrecken oder einen Teil davon sein. Wenn es sich bei dem Netz um ein Ballfangnetz handelt, ist das Netz selbst in den Videobildern kaum oder nicht zu sehen, da derartige Netze so aufgebaut sind, dass sie den Blick der Zuschauer auf das Spielfeld möglichst wenig behindern.

Vorzugsweise umfasst das Verfahren den Schritt des Einfügens der Grafik in das Gebiet. Es ist möglich, dass dieses Einfügen der Grafik von dem Gerät durchgeführt wird, mittels dem die Bilder einem Benutzer dargestellt werden. Sieht der Benutzer beispielsweise die Videobilder per Streaming an, so kann das Gebiet als Werbefläche dynamisch einer Grafik zugewiesen werden. Es ist in anderen Worten möglich, dass verschiedene Benutzer an der gleichen Stelle, nämlich im Bereich des Gebiets, unterschiedliche Grafiken sehen.

Gemäß einer bevorzugten Ausführungsform sowohl des Verfahrens als auch der Sportanlage weist die Infrarotstrahlung emittierende Struktur mindestens vier Infrarot-Sender auf. Die Infrarot-Sender sind vorzugsweise am Netz befestigt und oder am Netz ausgebildet. Die Infrarot-Sender umfassen beispielsweise Infrarot-Leuchtdioden. Günstig ist es, wenn die Infrarot-Sender einen Abstrahlbereich haben, der zumindest einem Viertel des vollen Raumwinkelbereichs entspricht. Auf diese Wiese kann der Infrarot-Sender seine Lage, insbesondere seine Winkellage, verändern, ohne dass das dazu führen würde, dass die Infrarotstrahlung nicht mehr von der Infrarotkamera aufgenommen werden kann.

Vorzugsweise senden zumindest zwei Infrarot-Sender entweder auf unterschiedlichen Infrarot-Wellenlängen und/oder senden unterschiedlich zeitlich modulierte Infrarot-Signale aus. Das Kamerasystem ist dann vorzugsweise ausgebildet zum Erfassen der unterschiedlichen Infrarot-Wellenlängen und/oder der unterschiedlich zeitlich modulierten Infrarot-Signale, und zum Bilden eines Kontrasts mit dem Hintergrund. Dort wo der Infrarot-Sender sendet, ist der Anteil an Infrarot-Strahlung der entsprechenden Infrarot-Wellenlänge und/oder der Infrarot-Strahlung, die auf die entsprechende Weise zeitlich moduliert ist, besonders stark. Die Position des Gebietes kann dadurch einfach und mit hoher Genauigkeit bestimmt werden.

Das Gebiet kann beispielsweise ein Rechteck oder ein höheres Polygon sein. Relevante Grafiken sind häufig rechteckig berandet, sodass das Einfügen besonders einfach ist. Zudem ist diese Lage eines Rechtecks besonders einfach.

Vorzugsweise besitzt das Netz eine Mehrzahl an Infrarot-Sendern, die an jeweiligen Soll-Positionen angeordnet sind. Das Verfahren umfasst vorzugsweise den Schritt eines zeitabhängigen Bestimmens der Ist-Position und des Berechnens der Position des Gebietes aus den Ist-Positionen. Das erfolgt beispielsweise durch Anpassen von Eckpunkten des Gebietes an die Ist-Position. Ist das Gebiet beispielsweise ein Rechteck, so besitzt dieses vier Ecken. Je nach Perspektive haben die vier Ecken unterschiedliche Lagen relativ zueinander. Aus den vier Ist-Positionen kann daher eindeutiger Weise das Rechteck bestimmt werden. Entsprechend kann jeder Punkt auf dem Rechteck berechnet werden. Liegt die Grafik ebenfalls als Rechteck vor, wird diese so verzerrt, dass sie exakt mit ihren Eckpunkten auf den Ist-Positionen liegt. Selbstverständlich kann die Berechnung für andere anders geformte Gebiete entsprechend durchgeführt werden. Das Rechteck wurde lediglich als Beispiel gewählt, da daran die Berechnung besonders einfach erläutert werden kann.

Im Rahmen der vorliegenden Beschreibung wird die Position insbesondere durch drei Raumkoordinaten beschrieben. Handelt es sich bei dem entsprechenden Objekt nicht um Punkte, so wird die Position zusätzlich durch die drei Orientierungswinkel angegeben.

Gemäß einer bevorzugten Ausführungsform umfasst das erfindungsgemäße Verfahren die Schritte eines Berechnens einer aktuellen Verzerrung des Gebiets aus den Positionsdaten und eines Einfügens einer gleich verzerrten Grafik in das Gebiet. Die Verzerrung kann sich beispielsweise dadurch ergeben, dass das Netz sich bewegt. Weht beispielsweise Wind, so kann sich ein Ballfangnetz bewegen. Das kontinuierliche Berechnen der Verzerrung des Netzes und das Einfügen einer gleich verzerrten Grafik in das Gebiet führt dazu, dass der Betrachter den Eindruck hat, die Grafik sei tatsächlich mit dem Netz verbunden.

Die Verzerrung wird beispielsweise dadurch berechnet, dass aus den Ist-Positionen ein Verzerrungstensor berechnet wird. Dieser Verzerrungstensor wird dann verwendet, um die Grafik auf die gleiche Weise zu verzerren.

Im Folgenden wird die Erfindung anhand der beigefügten Zeichnungen näher erläutert. Dabei zeigt:
- Figur 1: schematisch eine erfindungsgemäße Sportanlage,
- Figur 2: Videobild einer Teilansicht der Sportanlage,
- Figur 3: ein Infrarot-Strahlungsbild der Teilansicht der Sportanlage gemäß Figur 2 und
- Figur 4: ein erfindungsgemäßes Netz.

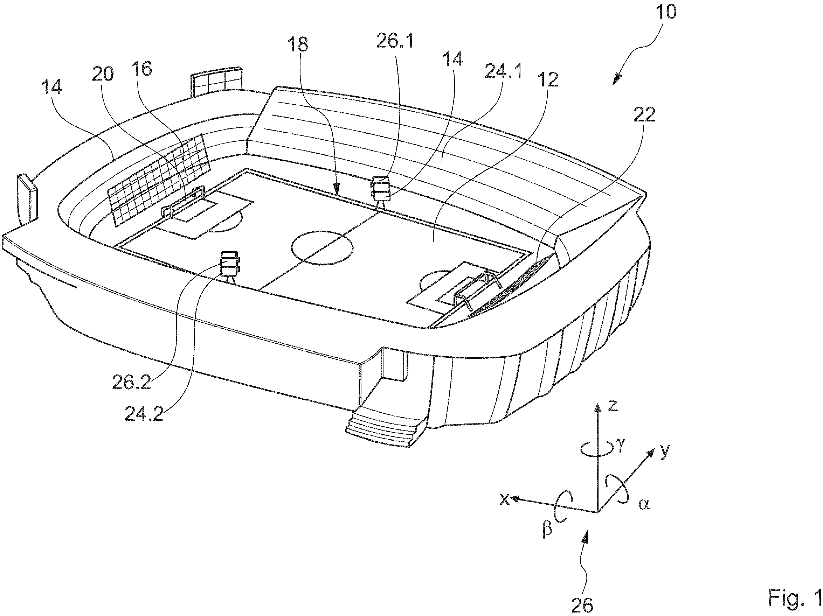

Figur 1 zeigt eine erfindungsgemäße Sportanlage 10, im vorliegenden Fall in Form eines Fußballstadions, die ein Spielfeld 12, Tribünen 14, ein Netz 16 in Form eines Ballfangnetzes und ein Kamerasystem 18 aufweist. Im vorliegenden Fall ist das Netz 16 vom Spielfeld 12 aus gesehen hinter einem Tor 20 gespannt. Die Sportanlage 10 kann weitere Netze aufweisen, beispielsweise ein zweites Netz 22, das im vorliegenden Fall ebenfalls ein Ballfangnetz ist.

Das Kamerasystem 18 umfasst eine erste Haupt-Kamera 24.1 und vorzugsweise zumindest eine weitere Haupt-Kamera 24.2. Die Haupt-Kameras 24.i (i = 1, ...) nehmen kontinuierlich Videobilder auf.

Alle Objekte, die Bestandteile der Sportanlage 10 sind, können in einem Koordinatensystem 26 beschrieben werden, das relativ zum Spielfeld 12 ortsfest ist.

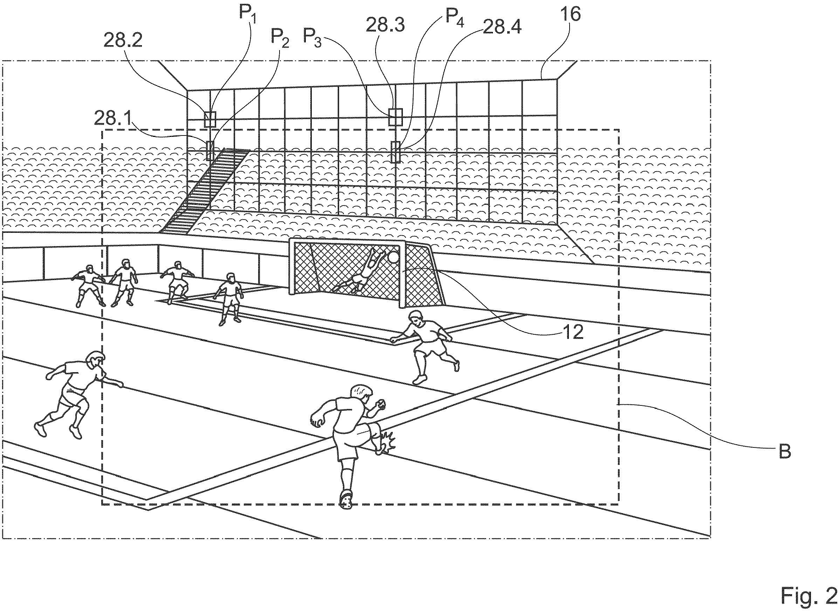

Figur 2 zeigt ein Detail der Sportanlage 10. Es ist schematisch ein Bild B eingezeichnet, das von der Haupt-Kamera 24.1 aufgenommen wird.

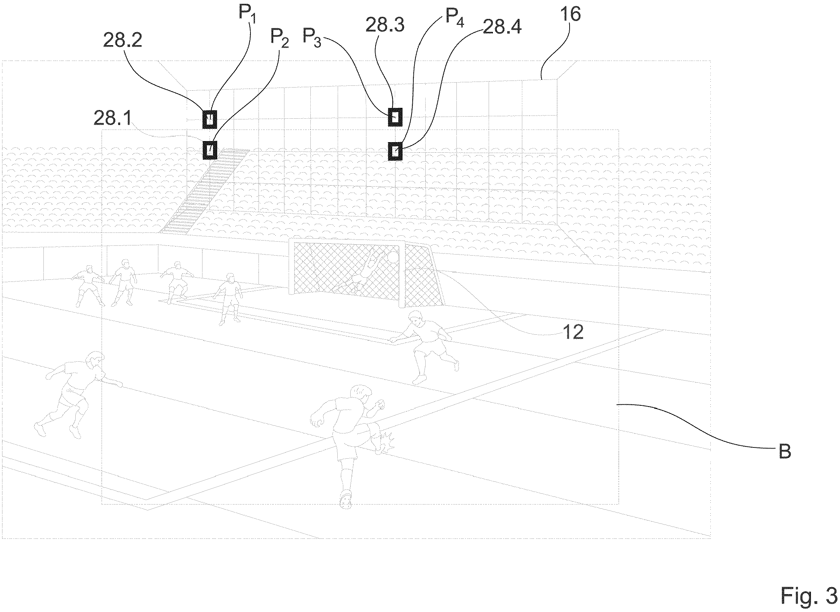

Figur 1 zeigt schematisch, dass an der Haupt-Kamera 24.1 eine Infrarotkamera 26.1 befestigt ist, die Bilder aus der gleichen Richtung aufnimmt. In Figur 3 ist schematisch ein Infrarot-Strahlungsbild I gezeigt. Gestrichelt ist das Bild B eingezeichnet, dass von der Haupt-Kamera 24.1 aufgenommen wird. Es ist zu erkennen, dass das Infrarot-Strahlungsbild I eine Mehrzahl an Punkten P zeigt.

Figur 2 zeigt, dass an den Positionen Pₙ (n = 1, 2, ..., N) jeweils ein Infrarot-Sender 28.N angeordnet ist.

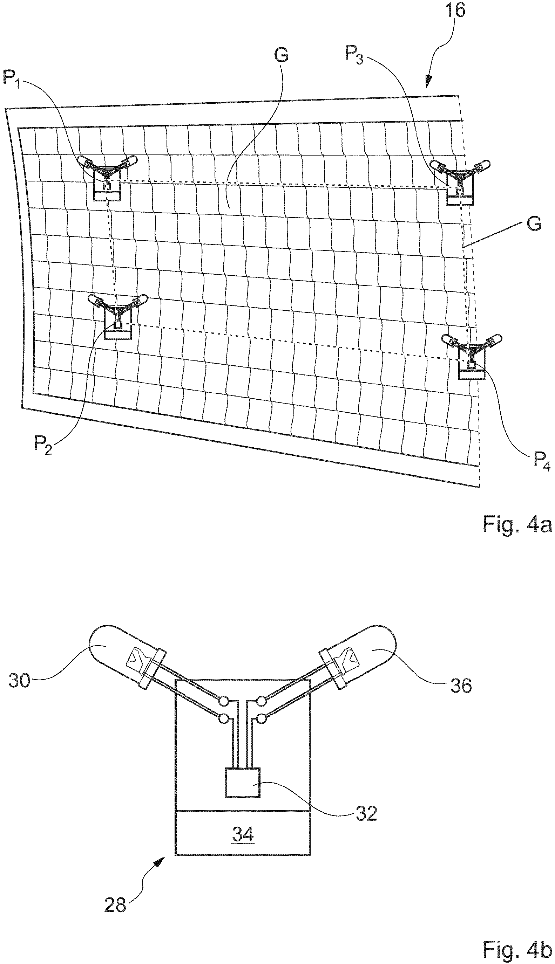

Figur 4b zeigt einen Infrarot-Sender 28, beispielsweise den Infrarot-Sender 28.1. Dieser besitzt eine IR-Diode 30, eine Steuereinheit 32 sowie eine Batterie 34. Günstig ist es, wenn der Infrarot-Sender 28 eine zweite IR-Diode 36 aufweist, die in eine zweite Strahlungsrichtung strahlt, die sich von einer ersten Strahlungsrichtung unterscheidet, in die die erste IR-Diode 30 strahlt.

Figur 4a zeigt das erfindungsgemäße Netz 16 mit vier Infrarot-Sendern 28.1...28.4.

Die Positionen P1, P2, P3, P4 begrenzen ein Gebiet G.

### Bezugszeichenliste:

- 10: Sportanlage
- 12: Spielfeld
- 14: Tribüne
- 16: Netz
- 18: Kamerasystem

- 20: Tor
- 22: zweites Netz
- 24: Haupt-Kamera
- 26: Infrarotkamera
- 28: Infrarot-Sender

- 30: IR-Diode
- 32: Steuereinheit
- 34: Batterie
- 36: zweite IR-Diode

- B: Bild
- I: Infrarot-Strahlungsbild
- P: Punkt
- n: Laufindex
- N: Zahl der Infrarot-Sender
- G: Gebiet

## Patentansprüche

1. Verfahren zum Erzeugen eines Videosignals, mit den Schritten:
(i) kontinuierliches Aufnehmen von Videobildern mittels einer Haupt-Kamera (24), sodass Videodaten erhalten werden,
(ii) kontinuierliches Aufnehmen von Infrarot-Strahlungsbildern (I), die von einem Ziel-Objekt ausgehen, mittels einer Infrarotkamera (26), sodass Infrarotbilddaten erhalten werden,
(iii) Bestimmen eines Gebiets (G) in den Videobildern aus den Infrarotbilddaten,
(iv) wobei das Ziel-Objekt ein Netz (16), insbesondere ein Ballfangnetz, ist, das zumindest eine Infrarotstrahlungssignal emittierende Struktur aufweist, und
(v) Verknüpfen von Positionsdaten, die die Position des Gebiets (G) kodieren, mit den Videodaten, sodass anhand der Positionsdaten eine Graphik in das Gebiet (G) einfügbar ist.

2. Verfahren nach Anspruch 1, **gekennzeichnet durch** den Schritt Einfügen der Graphik in das Gebiet (G).

3. Verfahren nach einem der vorstehenden Ansprüche, **dadurch gekennzeichnet, dass**
(a) die Infrarotstrahlung emittierende Struktur zumindest vier Infrarot-Sender (28.1, 28.2, 28.3, 28.4) aufweist, die am Netz (16) befestigt sind, und
(b) zumindest zwei Infrarot-Sender (28.1, 28.2) entweder auf unterschiedlichen Infrarot-Wellenlängen senden und/oder unterschiedlich zeitlich modulierte Infrarot-Signale senden.

4. Verfahren nach einem der vorstehenden Ansprüche, **dadurch gekennzeichnet, dass**
(i) das Netz (16) eine Mehrzahl an Infrarot-Sendern (28) aufweist, die an jeweiligen Soll-Positionen angeordnet sind,
(ii) zeitabhängig Ist-Positionen bestimmt werden und
(iii) eine Position des Gebiets (G) berechnet wird durch Anpassen an die Ist-Positionen.

5. Verfahren nach einem der vorstehenden Ansprüche, **gekennzeichnet durch** die Schritte:
(i) Berechnen einer aktuellen Verzerrung des Netzes (16) im Gebiet (G) aus den Positionsdaten und
(ii) Einfügen einer gleich verzerrten Graphik in das Gebiet (G).

6. Netz (16), insbesondere Ballfangnetz, **gekennzeichnet durch** zumindest eine Infrarotstrahlungssignal emittierende Struktur.

7. Netz (16) nach Anspruch 6, **dadurch gekennzeichnet, dass** die zumindest eine Infrarotstrahlungssignal emittierende Struktur zumindest vier Infrarot-Sender (28.1, 28.2, 28.3, 28.4) aufweist, die an einem Garn befestigt sind, aus dem das Netz (16) aufgebaut ist.

8. Netz (16) nach Anspruch 7, **dadurch gekennzeichnet, dass** zumindest zwei Infrarot-Sender (28.1, 28.2) entweder auf unterschiedlichen Infrarot-Wellenlängen senden und/oder unterschiedlich zeitlich modulierte Infrarot-Signale senden.

9. Sportanlage (10) mit
(a) einem Netz (16), insbesondere einem Ballfangnetz, nach einem der Ansprüche 6 bis 8 und
(b) einem Kamerasystem (18), das
(i) eine Haupt-Kamera (24) zum Aufnehmen von Videobildern im sichtbaren Frequenzbereich und
(ii) eine Infrarotkamera (26) zum kontinuierlichen Aufnehmen von Infrarot-Strahlungsbildern (I) von Infrarot-Strahlung, die von dem Infrarot-Sender (28) ausgeht, aufweist,
**dadurch gekennzeichnet, dass**
(c) die Infrarotstrahlungssignal emittierende Struktur am Netz (16) ausgebildet ist und
(d) das Kamerasystem (18) ausgebildet ist zum automatischen Durchführen eines Verfahrens mit den Schritten
(i) kontinuierliches Aufnehmen von Videobildern mittels der Haupt-Kamera (24), sodass Videodaten erhalten werden,
(ii) kontinuierliches Aufnehmen von Infrarot-Strahlungsbildern (I) von Infrarot-Strahlung, die von einem Ziel-Objekt ausgeht, mittels der Infrarotkamera (26),
(iii) Bestimmen eines Gebiets (G) in den Videobildern anhand der Infrarot-Strahlungsbilder (I) und
(iv) Verknüpfen von Positionsdaten, die die Positionen des Gebiets (G) kodieren, mit den Videodaten, sodass anhand der Positionsdaten eine Graphik in das Gebiet (G) einfügbar ist.

10. Sportanlage (10) nach Anspruch 9, **dadurch gekennzeichnet, dass** die Infrarotstrahlungssignal emittierende Struktur zumindest vier Infrarot-Sender (28.1, 28.2, 28.3, 28.4) zum Aussenden von Infrarotstrahlungssignalen aufweist.

11. Sportanlage (10) nach Anspruch 9 oder 10, **dadurch gekennzeichnet, dass** die Infrarotkamera (26) in räumlicher Nähe zur Haupt-Kamera (24) angeordnet ist.
